# EUROPÄISCHE PATENTANMELDUNG

(11) **EP 1 208 899 A2**
(43) Veröffentlichungstag der Anmeldung: **29.05.2002**
(21) Anmeldenummer: 01127004.8
(22) Anmeldetag: 14.11.2001
(51) Int. Cl.: B01D 25/21, B01D 25/28

(54) **Pressmembran für eine Plattenfilterpresse**

(30) Priorität: 22.11.2000 AT 19602000
(71) Anmelder: Semperit Aktiengesellschaft Holding, 1013 Wien (AT)
(72) Erfinder: Hochriehser, Karl, 2650 Payerbach (AT)
(74) Vertreter: Vinazzer, Edith, Dipl.-Ing.

(57) **Zusammenfassung**

Die Erfindung betrifft eine Pressmembran (1') aus einem elastomeren Material für eine Plattenfilterpresse mit zwischen Membran- und Kammerplatten (2, 3) gebildeten Kammern, wobei die Pressmembran (1') mit zumindest einer einvulkanisierten Stützscheibe (7') versehen ist, die an der einen Seite eine Stützfläche (7'a) zum flächigen Abstützen einer Stütznocke (15) einer Kammerplatte (2) und an der anderen Seite eine Stützfläche (7'a) zum flächigen Abstützen einer Stütznocke (14) einer Membranplatte (2) aufweist.

Gemäß der Erfindung wird die Pressmembran dadurch in ihrer Haltbarkeit verbessert, dass der Verbindungsbereich des elastomeren Materials der Membran (1') zur Stützscheibe (7') gegenüber den Stützflächen (7'a) der Stützscheibe (7') nach innen versetzt ist.

## Beschreibung

Die Erfindung betrifft eine Pressmembran aus einem elastomeren Material für eine Plattenfilterpresse mit zwischen Membran- und Kammerplatten gebildeten Kammern, wobei die Pressmembran mit zumindest einer einvulkanisierten Stützscheibe versehen ist, die an der einen Seite eine Stützfläche zum flächigen Abstützen einer Stütznocke einer Kammerplatte und auf der anderen Seite eine Stützfläche zum flächigen Abstützen einer Stütznocke einer Membranplatte aufweist.

Es ist bekannt, dass bei zur Filtration von Suspensionen vogesehenen Platterfilterpressen beim Befüllvorgang und beim Pressvorgang in den zwischen den Kammer- und den Membranplatten gebildeten Kammern Differenzdrücke auftreten, deren Ursachen eine unterschiedliche Durchlässigkeit der verwendeten Filtertücher, Schwankungen im Fülldruck oder auch unterschiedliche Füllgeschwindigkeiten sein können. Die unterschiedlichen Druckverhältnisse führen zu Plattendurchbiegungen, die jedoch nur begrenzt möglich sind, da vorgesehen ist, dass sich die Platten im Bereich von Stütznocken, örtlichen Plattenverdickungen, gegenseitig abstützen können. Befindet sich die Trübebohrung der Presse außermittig oder außerhalb der Platten so ist pro Platte jeweils nur eine Stütznocke vorgesehen. Befindet sich die Trübebohrung im Bereich der Plattenmitte, so werden pro Platte meist vier Stütznocken vorgesehen. Im Bereich der Stütznocken ist die Pressmembran jeweils mit einer Stützscheibe, die üblicherweise aus Kunststoff besteht, versehen. Die Stützscheibe(n) wird bzw. werden bei der Herstellung der Membran einvulkanisiert. Dabei ist das Gummimaterial der Membran über eine an der umlaufenden Stirnfläche der Scheibe ausgebildete Nut mit der Scheibe verbunden. Die Gummimembran allein würde den auftretenden Belastungen auf Dauer nicht standhalten können. Über die Stützscheibe erfolgt nun die Übertragung der Abstützungskräfte von der Stütznocke der einen Platte auf die Stütznocke der benachbarten Platte. Lediglich das Filtertuch verläuft weiterhin zwischen der Stütznocke der betreffenden Kammerplatte und der mit der Stützscheibe versehenen Membran. Die Stützscheibe ist dabei derart mit der Membran verbunden, dass ihre Stützflächen bündig mit den Außenseiten der Membran abschließen. Die am Randbereich der Stützflächen der Stütznocken befindlichen äußeren Verbindungsstellen zwischen Scheibe und Membranmaterial werden daher durch die zwischen den einzelnen Bauteilen möglichen Relativbewegungen, insbesondere durch Bewegungen der Platten relativ zur Membran bzw. Stützscheibe, stark beansprucht. In diesen stark beanspruchten Bereichen der Membran entstehen daher schon nach relativ kurzer Benützungsdauer Risse, die einen baldigen Austausch der Membran erfordern.

Der Erfindung liegt nun die Aufgabe zu Grunde, eine Pressmembran für eine Plattenfilterpresse in den Verbindungsbereichen zu der bzw. den Stützscheibe(n) wesentlich haltbarer auszuführen, wobei jedoch weiterhin eine wirtschaftliche und einfache Herstellung der Pressmembran mitsamt der bzw. den Stützscheibe(n) möglich sein soll.

Die gestellte Aufgabe wird erfindungsgemäß dadurch gelöst, dass der Verbindungsbereich des elastomeren Materials der Membran zur Stützscheibe gegenüber den Stützflächen der Stützscheibe nach innen versetzt ist.

Nach der Erfindung werden die bei äußerer Krafteinwirkung empfindlichen und kritischen äußeren Verbindungsbereiche der Membran zu der bzw. den Stützscheibe(n) so gesetzt, dass Schub- und Scherbelastungen nicht mehr auf den Verbindungsbereich und somit nicht mehr unmittelbar auf das elastomere Material übertragen werden können. Damit wird die Haltbarkeit der Membran deutlich verbessert. Eine erfindungsgemäß ausgeführte Pressmembran lässt sich wie jene aus dem Stand der Technik auf einfache und kostengünstige Weise herstellen.

Gemäß einer bevorzugten Ausführungsform der Erfindung wird der Verbindungsbereich von einem an der umlaufenden Stirnseite der Stützscheibe ausgebildeten Verbindungswulst gebildet, welcher vom elastomeren Material der Membran U-förmig umhüllt ist. Mit einem derart ausgeführten Verbindungsbereich kann auf einfache Weise das Elastomermaterial der Membran so weit nach innen gesetzt werden, dass ein unerwünschter Kontakt zu den Stütznocken der Membran-oder der Kammerplatte vermieden wird.

Dabei ist ferner von Vorteil, wenn die Stützscheibe derart dimensioniert wird, dass ihre Stützflächen von den Stützflächen der Stütznocken überdeckbar sind, wobei es zusätzlich günstig ist, wenn die Stützscheibe mitsamt dem Verbindungswulst eine Fläche einnimmt, die höchstens den Stützflächen der Stütznocken entspricht. Dadurch können die auf den Membran im Betrieb der Presse übertragenen Spannungen und Kräfte gering gehalten und die erforderliche Beweglichkeit der Membran sichergestellt werden.

Der Verbindungswulst wird erfindungsgemäß mit einem sich nach außen konisch verringernden Querschnitt versehen und mit je einer gerillten Ober- und Unterseite ausgeführt. Diese Maßnahmen unterstützen eine dauerhaltbare Verbindung des Gummimaterials der Membran zur Stützscheibe und sind mit dem Vorteil verbunden, dass die im Verbindungsbereich wirkende Kräfte und Spannungen auf besonders günstige Weise abgebaut werden können.

In diesem Zusammenhang ist es von Vorteil, wenn die im Bereich des Verbindungswulstes verlaufenden Außenseiten des elastomeren Materials der Membran ebenfalls mit Rillen versehen werden, wobei vorzugsweise der Verlauf der Rillen im Elastomermaterial der Membran mit dem Verlauf der Rillen im Verbindungswulst übereinstimmt. Damit werden die Beweglichkeit und die Belastbarkeit der Membran im Verbindungsbereich noch weiter verbessert.

Anhand der Figuren werden nun eine aus dem Stand der Technik bekannte Ausführung und ein Ausführungsbeispiel der Erfindung näher erläutert. Dabei zeigen
Fig. 1 einen Querschnitt durch ein in bekannter Weise ausgeführtes Plattenpaket für eine Plattenfilterpresse während des Befüllvorganges,
Fig. 2 in einem vergrößerten Maßstab einen der Stütznockenbereiche aus Fig. 1,
Fig. 3 analog zu Fig. 2 einen Querschnitt durch einen Teilbereich eines Plattenpaketes mit einer Ausführungsform der Erfindung und
Fig. 4 und 5 vergrößerte Ansichten von Ausschnitten des Teilbereiches aus Fig. 3.

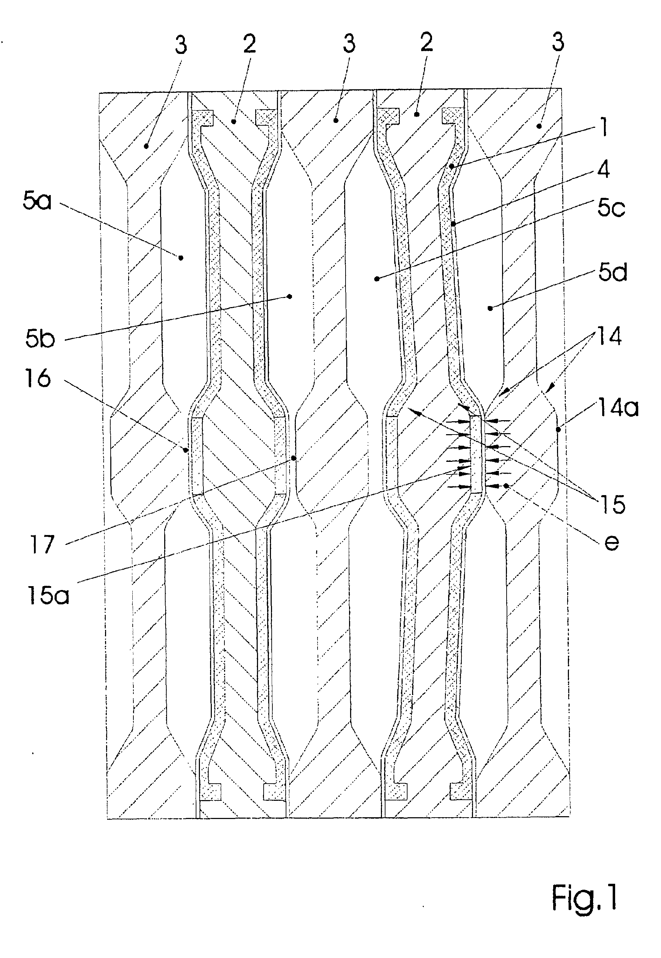

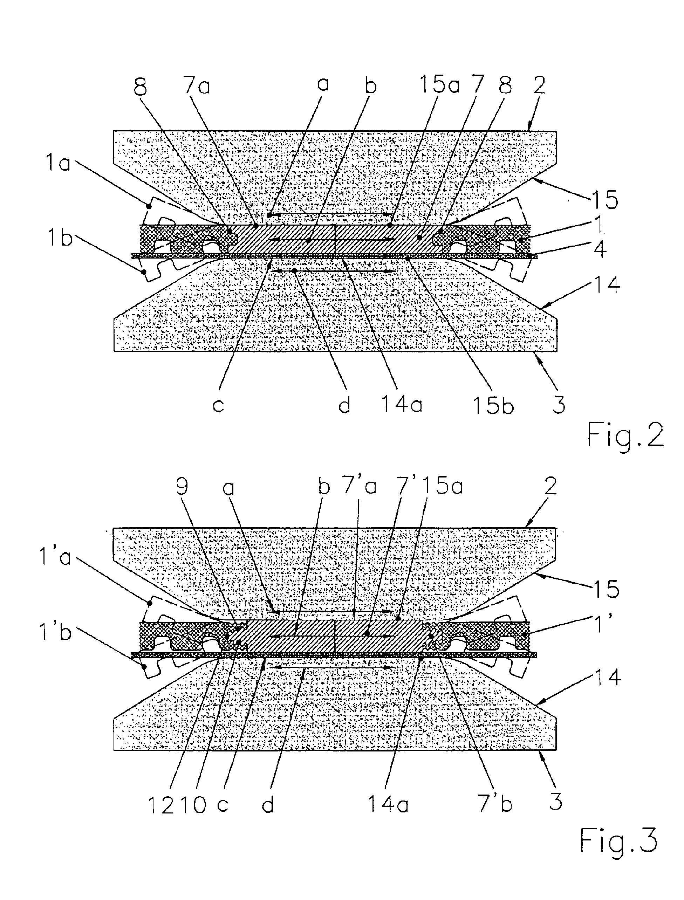

Fig. 1 zeigt einen Querschnitt durch einen Teil eines Plattenpaketes bei geschlossener Filterpresse, deren weitere Bestandteile nicht dargestellt sind und in herkömmlicher Art und Weise ausgeführt sein können. Das Plattenpaket besteht aus einer Anzahl von abwechselnd angeordneten Kammerplatten 3 und Membranplatten 2. In Fig. 1 sind dabei drei Kammerplatten 3 und jeweils eine der zwischen diesen befindlichen Membranplatten 2 dargestellt. Die Platten 2, 3 sind derart ausgenommen bzw. gestaltet, dass, wie Fig. 1 zeigt, bei geschlossener Presse, zwischen den Platten 2, 3 Kammern 5a, 5b, 5c, 5d gebildet sind. Mittig sind sowohl in den Kammerplatten 3 als auch in den Membranplatten 2 durch örtliche Verdickungen Stütznocken 14, 15 gebildet, die zumindest im Wesentlichen übereinstimmend ausgeführte Stützflächen 14a, 15a aufweisen. Bei geschlossener Presse und wenn kein oder wenig Druck in den Kammern 5a, 5b, 5c, 5d wirkt, verbleiben im Bereich der Stütznocken 14, 15 zwischen den Kammerplatten 3 und den Membranplatten 2 Durchlässe 16, 17. Die Stütznocken 14, 15 gestatten jedoch ein gegenseitiges Abstützen von einander benachbarten Kammerplatten 3 und Membranplatten 2 unter Druckeinwirkung. Beidseitig jeder Membranplatte 2 ist eine elastomere, insbesondere aus einem geeigneten Gummimaterial bestehende Membran 1 angeordnet bzw. am Rand der Membranplatte 2 fixiert. Die der benachbarten Kammerplatte 3 zugewandte Membranseite ist genoppt und wirkt mit einem hier angeordneten Filtertuch 4 zusammen. Wie insbesondere Fig. 2 zeigt, ist in die Membran 1 im Stütznockenbereich eine Kunststoffscheibe 7 einvulkanisiert, die Stützflächen 7a für die Stützflächen 14a, 15a der Stütznocken 14, 15 zur Verfügung stellt. Der Verbindungsbereich wird durch die umlaufende Stirnseite der Scheibe 7 gebildet, wo eine Nut ausgebildet ist, in die das Gummimaterial der Membran 1 eindringt. Die Scheibe 7 ersetzt die Membran 1 und ist auch in deren Stärke ausgeführt. Die Größe der Stützflächen 14a, 15a und der Stützflächen 7a stimmen zumindest im Wesentlichen überein.

Ein Filtriervorgang läuft grundsätzlich derart ab, dass die zu trennende oder zu reinigende Suspension unter Druck derart den Kammern 5a, 5b, 5c, 5d zugeführt wird, dass sich die Filtertücher 4 an die Membranen 1 anschmiegen. Nach dem Füllen der Kammern 5a, 5b, 5c, 5d wird ein Überdruck erzeugt, der bewirkt, dass die flüssige Phase der Suspension durch die Filtertücher 4 hindurchtritt, über die genoppten Seiten der Membranen 1 gesammelt und auf hier nicht dargestellte Weise abgeführt wird. Die feste Phase in der Form von Filterkuchen wird dagegen von den Filtertüchern 4 zurückgehalten. Nach dem Öffnen der Presse werden die Filterkuchen entfernt.

Beim Befüllvorgang und beim Pressen können in den Kammern 5a, 5b, 5c, 5d, insbesondere bedingt durch eine unterschiedliche Durchlässigkeit der Filtertücher (ältere Tücher, neue Tücher), durch Schwankungen im Fülldruck oder Schwankungen der Füllgeschwindigkeit unterschiedliche Drücke in den durch die Membranplatten 2 und die Kammerplatten 3 gebildeten Kammern 5a, 5b, 5c, 5d wirken. Daraus resultiert eine unterschiedliche Durchbiegung der Platten 2, 3. Fig. 1 zeigt dies anhand der rechten Membranplatte 2, die etwas durchgebogen ist und sich über die Scheibe 7 mit ihrer Stütznocke 15 an der Stütznocke 14 der in dieser Zeichnungsfigur rechts benachbarten Kammerplatte 3 abstützt. Die wirkenden Presskräfte sind durch Pfeile e verdeutlicht.

Fig. 2 zeigt in einem vergrößerten Maßstab eine Lage bei einer gegenseitigen Abstützung der Stütznocken 14, 15 einer der Kammerplatten 3 und einer der Membranplatten 2 über die Scheibe 7. Durch die Pfeile a, b, c und d ist hier zusätzlich die gegenseitige Beweglichkeit der einzelnen Bestandteile angedeutet. Da die Platten 2, 3 nicht über Führungs- oder Zentriereinrichtungen miteinander in Verbindung sind, verschieben sie sich etwas beim Schließen der Presse, was durch die Doppelpfeile a und d angedeutet ist. Beim Befüllen der Kammern wird das Filtertuch 4 gegen die Membran 1 gedrückt. Der damit verbundene Längenbedarf bzw. die auftretende Dehnung des Tuches 4 haben eine Relativbewegung des Filtertuches 4 gegenüber den Platten 2, 3 zur Folge, die durch den Doppelpfeil c verdeutlicht ist. Auch die Membran 1 bewegt sich beim Füllvorgang relativ zu den beiden Platten 2, 3, wie der Doppelpfeil b andeutet. In Fig. 2 ist ferner mit strichpunktierten Linien 1a die Membranposition während des Befüllens der Kammern und mit strichpunktierten Linien 1b die Membranposition beim Abpressvorgang eingezeichnet. Die dabei auftretenden Biege- und Zugspannungen, die von der Druck- und Scheuerbelastung durch die Beweglichkeit der einzelnen Bestandteile (siehe Pfeile a, b, c und d) überlagert werden, belasten insbesondere die Verbindungsstellen 8 zwischen der Scheibe 7 und der Membran 1. Dabei können relativ bald in der Membran 1 Risse entstehen, welche die Lebensdauer derselben reduzieren.

Durch die Erfindung, insbesondere durch eine besondere Verbindung der Membran mit der bzw. den Scheibe(n), kann die Lebensdauer der Membran deutlich erhöht werden.

Ein Ausführungsbeispiel der Erfindung zeigt Fig. 3 bis 5. Analog zu Fig. 2 ist in Fig. 3 ebenfalls eine Lage bei gegenseitiger Abstützung einer der Kammerplatten 3 gegenüber einer der Membranplatten 2 im Bereich der Stütznocken 14, 15 dargestellt. Die Doppelpfeile a, b, c und d verdeutlichen in analoger Weise die gegenseitige Beweglichkeit der einzelnen Bestandteile. Die Membran 1' ist, wie oben beschrieben, mit einer genoppten Seite versehen, die mit dem Filtertuch 4 zusammenwirkt. Gemäß der Erfindung ist nun die Scheibe 7' so ausgeführt, dass sie an ihrer Stirnseite einen abstehenden und umlaufenden Verbindungswulst 7'b aufweist, der vom Gummimaterial der Membran 1' derart U-förmig umhüllt ist, dass hier das elastomere Material der Membran 1' gegenüber den Stützflächen 7'b nach innen versetzt ist. Die Verbindungsstellen 8' sind somit ebenfalls nach innen versetzt, wodurch im Verbindungsbereich der Scheibe 7' zur Membran 1' ein direkter Kontakt der Stützflächen 14a, 15a der Stütznocken 14, 15 und des Filtertuches 4 bei einem Zusammenpressen der beiden Platten 2, 3 nicht mehr erfolgt. Bei der dargestellten Ausführungsform wird dabei die Scheibe 7' stärker ausgeführt als die Membran 1', sodass die beiden Stützflächen 7'a von der Membran 1' abgesetzt sind. Um die erforderliche Beweglichkeit der Membran 1' sicherzustellen und gleichzeitig die auf die Membran 1' wirkenden Spannungen und Kräfte möglichst gering zu halten, ist es ferner von Vorteil, wenn die Scheibe 7' derart dimensioniert wird, dass sie insgesamt eine Fläche einnimmt, die von den Stützflächen 14a, 15a der Stütznocken 14, 15 überdeckbar ist und insbesondere höchstens diesen Flächen entspricht.

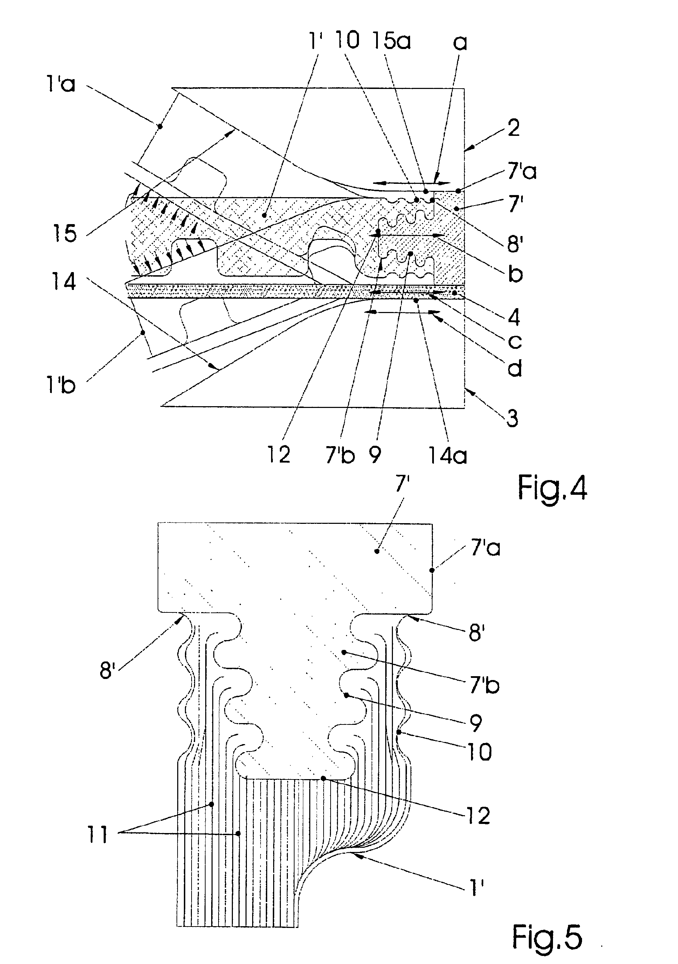

Der parallel zur Scheibenebene an der umlaufenden Stirnseite ausgebildete Verbindungswulst 7'b weist einen sich nach außen konisch verjüngenden Querschnitt auf und endet bei der dargestellten Ausführungsform mit einer zur Scheibenebene senkrecht verlaufenden äußeren Stirnseite 12. Die symmetrisch zur Mittelebene ausgebildete Ober- und Unterseite des Verbindungswulstes 7'b ist jeweils mit einer Anzahl von Rillen 9 versehen. Bei der dargestellten Ausführungsform sind jeweils drei Rillen 9 vorgesehen, wobei durch entsprechend abgerundet ausgeführte Übergangsbereiche zwischen den Rillen 9 ein im Querschnitt gewellter Verlauf entsteht. Das Gummimaterial der Membran 1' umhüllt U-förmig den Verbindungswulst 7'b unter Auffüllen der Rillen 9. Die Außenseiten der Membran 1' sind im Verbindungsbereich zum Wulst 7'b in Übereinstimmung mit den Rillen 9 ebenfalls mit Rillen 10 versehen, die hier etwas flacher ausgeführt sind als die Rillen 9. Der Übergang des Verbindungswulstes 7'b zur Scheibe 7' und der Übergang der Membran 1' zur Scheibe 7' erfolgen über eine Rille 9 bzw. 10. Der derart gebildete fließende Übergangsbereich zwischen der Membran 1' und der Kunststoffscheibe 7' ist somit kaum noch rissgefährdet. Druck- und Scheuerbelastungen durch die Relativbewegungen der hier befindlichen Bauteile (siehe die Doppelpfeile a, b, c und d in Fig. 3) können nicht mehr auf die Verbindungsstellen 8' übertragen werden. Die während des Füllens und des Abpressens in der Membran 1' auftretenden Spannungen werden über die Rillen 10, die die erforderliche Beweglichkeit der Membran 1' zulassen und ausgleichen können, nach innen zu weitgehend abgebaut. In Fig. 5 ist dies anhand des Verlaufes von Kraftlinien 11 verdeutlicht. In Fig. 4 ist mit strichlierten Linien 1'a die Position der Membran 1' während des Befüllens der Kammern und mit strichlierten Linien 1'b jene während des Abpressens angedeutet.

Die Erfindung ist auf das dargestellte Ausführungsbeispiel nicht eingeschränkt. So kann der Verbindungsbereich Membran zu Stützscheibe(n) abweichend ausgeführt sein. Es können ferner sowohl der Verbindungswulst als auch die Membran mit einer größeren Anzahl von Rillen versehen werden. Lage und Größe der Stützflächen der Scheibe können variiert werden. Möglich ist es auch, die Scheibe in einer mit der Membrandicke übereinstimmenden Stärke auszuführen und im Verbindungsbereich durch eine entsprechende Dimensionierung des Gummimaterials und des Verbindungswulstes sicherzustellen, dass hier die Stütznocken mit dem Verbindungsbereich nicht in Kontakt treten können.

## Patentansprüche

1. Pressmembran aus einem elastomeren Material für eine Plattenfilterpresse mit zwischen Membran- und Kammerplatten gebildeten Kammern, wobei die Pressmembran mit zumindest einer einvulkanisierten Stützscheibe versehen ist, die an der einen Seite eine Stützfläche zum flächigen Abstützen einer Stütznocke einer Kammerplatte und an der anderen Seite eine Stützfläche zum flächigen Abstützen einer Stütznocke einer Membranplatte aufweist,
**dadurch gekennzeichnet,**
**dass** der Verbindungsbereich des elastomeren Materials der Membran (1') zur Stützscheibe (7') gegenüber den Stützflächen (7'a) der Stützscheibe (7') nach innen versetzt ist.

2. Pressmembran nach Anspruch 1, **dadurch gekennzeichnet, dass** der Verbindungsbereich einen an der umlaufenden Stirnseite der Stützscheibe (7') ausgebildeten Verbindungswulst (7'b) aufweist, welcher vom Elastomermaterial der Membran (1') U-förmig umhüllt ist.

3. Pressmembran nach Anspruch 1 oder 2, **dadurch gekennzeichnet, dass** die Stützflächen (7'a) der Scheibe (7') von den Stützflächen (14a, 15a) der Stütznocken überdeckbar sind.

4. Pressmembran nach einem der Ansprüche 1 bis 3, **dadurch gekennzeichnet, dass** die Stützscheibe (7') mitsamt Verbindungswulst (7'b) parallel zur Scheibenebene auf eine Fläche projezierbar ist, die höchstens den Stützflächen (14a, 15a) der Stütznocken (14, 15) entspricht.

5. Pressmembran nach einem der Ansprüche 1 bis 4, **dadurch gekennzeichnet, dass** der Verbindungswulst (7'b) einen sich nach außen konisch verjüngenden Querschnitt aufweist und mit je einer gerillten Ober- und Unterseite versehen ist.

6. Pressmembran nach einem der Ansprüche 1 bis 5, **dadurch gekennzeichnet, dass** die im Bereich des Verbindungswulstes (7'b) verlaufenden Außenseiten des Elastomermaterials der Membran (1') mit die Stützscheibe (7') umlaufenden Rillen (10) versehen sind.

7. Pressmembran nach einem der Ansprüche 1 bis 7, **dadurch gekennzeichnet, dass** der Verlauf der Rillen (10) im Elastomermaterial der Membran (1') mit dem Verlauf der Rillen (9) am Verbindungswulst (7'b) übereinstimmt.
